# EUROPEAN PATENT APPLICATION

(11) **EP 2 001 251 A1**
(43) Date of publication of application: **10.12.2008**
(21) Application number: 07010989.7
(22) Date of filing: 04.06.2007
(51) Int. Cl.: H04Q 7/38

(54) **Enhanced emergency call for track-based transportation systems**

(71) Applicant: Nokia Siemens Networks Oy, 02610 Espoo (FI)
(72) Inventor: The designation of the inventor has not yet been filed
(74) Representative: Schober, Ralf Stefan

(57) **Abstract**

The present invention relates to a method, network element, functional network node (90), terminal device (70), and system for handling an emergency call in a track-based transportation system, wherein the emergency call is based on a group call service covering a predefined geographical area, wherein the predefined geographical area is split into at least two sectors, and wherein a sector information indicating a sector associated with the emergency call is distributed to terminal devices (70) located within the predefined geographical area, the terminal devices controlling their emergency call processing based on the distributed sector information.

## Description

### FIELD OF THE INVENTION

The present invention relates to a method, a system, terminal device, functional network node, and network element for handling an emergency call in a track-based transportation system, such as the Global System for Mobile Communications - Railway (GSM-R).

### BACKGROUND OF THE INVENTION

GSM-R is a wireless communication platform developed specifically for railway communication and applications. GSM-R offers a secure platform for voice and data communication between railway operational staff, including drivers, dispatchers, shunting team members, train engineers, and station controllers. It delivers features such as group calls, voice broadcast, location-based connections, and call pre-emption in case of an emergency. This will support applications such as cargo tracking, video surveillance in trains and at stations, and passenger information services.

The voice group call service (VGCS) allows a great number of users to participate in the same call. This feature is similar to the analog private mobile radio (PMR) group call with the Push-to-Talk (PTT) key. Three kinds of users are defined: The talker, the listener and the dispatcher. The talker can become a listener by releasing the PTT key and a listener becomes a talker by pressing the PTT key. An advantage of VGCS compared to multi-party call (e.g. conference call) is the spectrum efficiency. When many users are in the same cell they will use only one frequency for all listeners and two frequencies for the talker.

A railway emergency call (REC) is a group call with a specific group identity (ID). Emergency call areas may consist of one or more network cells of a wireless network. These cells are combined in a group call register (GCR), and are directly related to a dispatcher number. The balance between railway safety on the one hand and unwanted stopping of not concerned trains on the other hand has to be designed carefully. Theoretically, an emergency call from a GSM-R train can result in a 10km warning zone for GSM-R trains and a 100km warning zone for analog trains. However, for a dispatcher this may not be acceptable. Trains may have to stop even if they are not on an affected track. All railway tracks within a VGCS area are covered with one REC even if they are not interlinked and an emergency track does not affect the other tracks. Starting a REC by dialing for example "299" initiates an emergency situation for all trains within this area.

### SUMMARY OF THE INVENTION

It is therefore an object of the present invention to provide a method and system for an enhanced emergency call function, by means of which the number of stopped unaffected trains in an emergency situation can be reduced.

This object is achieved by a method of handling an emergency call in a track-based transportation system, wherein said emergency call is based on a group call service covering a predefined geographical area, wherein said predetermined geographical area is split into at least two sectors, and wherein a sector information indicating at least one sector associated with said emergency call is distributed to terminal devices located within said predefined geographical area, said terminal devices controlling their emergency call processing based on said distributed sector information.

Additionally, the above object is achieved by a network element for handling an emergency call in a track-based transportation system, wherein said emergency call is based on a group call service covering a predefined geographical area, and wherein said predefined geographical area is split into at least two sectors, said network element being adapted to distribute a sector information specifying at least one sector affected by said emergency call to terminal devices located within said predefined geographical area.

Furthermore, the above object is achieved by a functional network node for handling an emergency call in a track-based transportation system, wherein said emergency call is based on a group call service covering a predefined geographical area, and wherein said predefined geographical area is split into at least two sectors, said functional network node being adapted to derive a sector information indicating a sector associated with said emergency call from at least one of a received vehicle number and a received identification of a network cell.

Moreover, the above object is achieved by a terminal device for handling an emergency call in a track-based transportation system, wherein said emergency call is based on a group call service covering a predefined geographical area and wherein said predefined geographical area is split into at least two sectors, said terminal device being adapted to receive a sector information specifying at least one sector affected by said emergency call and to control its emergency processing based on said sector information.

Accordingly, by the splitting the predefined geographical area into different sectors, which may be associated with specific tracks and/or trains, and distributing the sector information to terminal devices within the predefined geographical area, the terminal devices are able to check whether they are in the affected sector area or not. The terminal devices can then decide whether to participate in the emergency call or not.

Additionally, implementation of the proposed enhanced emergency call handling in the functional network node enables origination of the enhanced emergency call without affecting interfaces towards other network parts, e.g., a circuit-switched core network. This reduces introduction requirements of the proposed enhanced emergency call to an upgrade of the functional network node, e.g., changed administration in the group call register (GCR) of the core network. The new functionality can thus be introduced in networks where the rest of the network or parts thereof are supplied by other vendors. Moreover, the impact on terminal devices is minimized through backwards compatibility achieved by allowing origination of the proposed enhanced emergency call functionality without any change in the terminal devices.

The sector information may be distributed as one of a predetermined number of sector-specific group identities of the group call service. As an example, the sector-specific group identity may be transformed into a general group identity of the group cell service and a sector identity notified to the terminal devices. The sector identity may be notified as a dedicated digit field of the general group identity, for example. The terminal devices may then check whether the sector identity belongs to an own set of activated sector identities and either join the emergency call if the sector identity belongs to the set, or ignore the notification if the sector identity does not belong to the set.

The emergency call may be triggered by issuing a regular emergency call directed to the predefined geographical area, wherein the regular emergency call is transformed into the emergency call by a network element provided on a transmission path of the regular emergency call. In a specific example, this network element may be a mobile switching center.

The regular emergency call may be issued by generating a setup message. This setup message may be routed by the network element to a functional node together with at least one of a vehicle number of a vehicle from which the regular emergency call has been issued and with an identification of a cell in which the vehicle is located. The functional node may then derive the sector information from at least one of the vehicle number and the identification of the cell.

As an example, the functional node may retrieve the sector information from a preconfigured storage table, modify the setup message by replacing a group identity of the regular emergency call by a sector-specific group identity, and send the modified setup message back to the network element. Furthermore, the functional node may retrieve all sector-specific group identities associated with a vehicle number, in response to a functional registration of a terminal device provided on a vehicle having said vehicle number, and signal said sector-specific group identities to said terminal device, wherein said terminal device may store the signal sector-specific group identities as an activated set of sector-identifications. The activated set of sector identities may be changed at least one of predetermined events, points in time, and locations of the terminal device. This change may be initiated by the terminal device or from the network side.

The sector information may be selected so as to ensure that the sector identity is not activated in two terminal devices traveling in the same radio area but on operationally independent lines or tracks.

Further advantageous modifications are defined in the dependent claims.

### BRIEF DESCRIPTION OF THE DRAWINGS

The present invention will now be described in greater detail based on preferred embodiments with reference to the accompanying drawings, in which:
Fig. 1 shows a schematic architecture of a cellular network arrangement in which the emergency call handling according to the preferred embodiments can be implemented;
Fig. 2 shows a schematic diagram indicating track-related emergency call areas;
Fig. 3 shows a state diagram of an enhanced emergency call operation according to the preferred embodiments;
Fig. 4 shows a schematic format of an enhanced group identity with added sector identity according to the preferred embodiments;
Fig. 5 shows a schematic signaling and processing diagram for an emergency call originating functionality according to a preferred embodiment; and
Fig. 6 shows a schematic signaling and processing diagram of an emergency call notification functionality according to an embodiment.

### DESCRIPTION OF THE EMBODIMENTS

In the following, embodiments of the present invention will be described in connection with a cellular railway communication environment, such as the GSM-R system, as an example for a communication system for track-based transportation systems.

The current railway emergency call (REC) implementation is based on a single group identity (GID), such as for example "299" or "599", and either the cell identified with the originating mobile or the related dispatcher. According to the proposed embodiments, enhanced REC (eREC) sectors and corresponding sector identities are defined and signaled to allow discrimination between eREC calls in the same area.

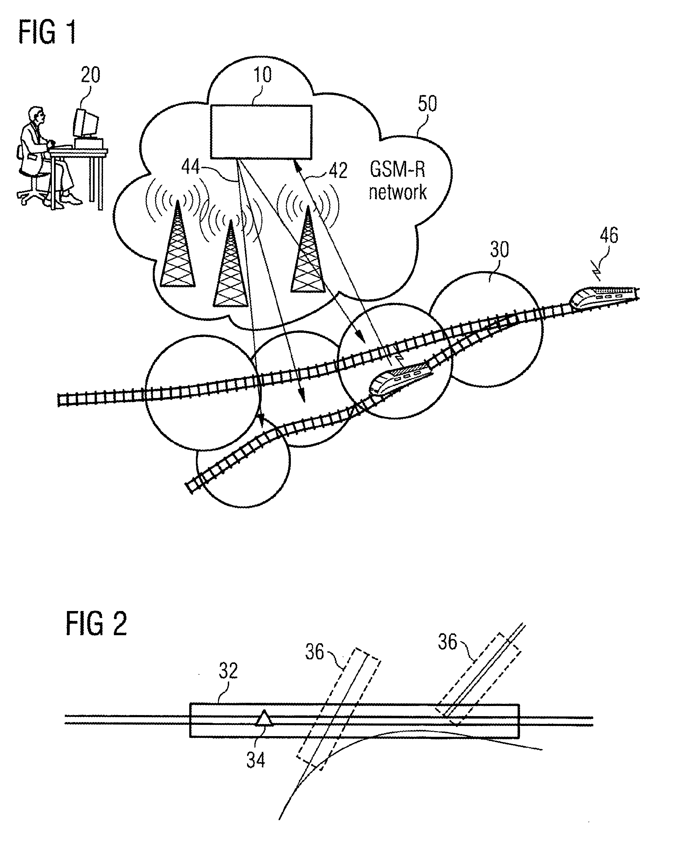

Fig. 1 shows a schematic diagram indicating the general environment of the eREC system, wherein eREC sectors 30 are provided along railway tracks. A call processing and signaling entity 10 is responsible for receiving call setups 42 by which an emergency call is initiated using VGCS and a sector identity is passed to a cellular network (e.g. GSM-R network) 50. Furthermore, the network 50 issues call notifications 44 by setting up a VGCS call and passing the sector identity to the terminal devices (e.g. mobile phones, mobile stations (MSs), user equipments (UEs), etc.) in the concerned group call area. The network 50 provides a radio interface to terminal devices (not shown) within the coverage area of the cellular network. Before entering a new eREC sector, a terminal device (which may be located on a train, as shown in Fig. 1) receives an update signaling 46 informing the terminal device about the sector identity applicable for the area to be entered. If required, the terminal device sets up an emergency call (VGCS) and passes the sector identity to the cellular network 50. In response thereto, the network 50 distributes call notifications 44 to all cells belonging to the group call area, e.g., via a VGCS "299" call as used in the conventional REC with the exception that a sector identity is also passed on the downlink.

Additionally, a controller interface 20 is provided for controlling operation of the network 50, e.g., setting network parameters, initiating procedures, etc..

An eREC terminal device which receives such an eREC call signaling or call notification 44 joins an emergency call if the sector identity signaled by the network on the downlink matches the sector identity obtained via the sector identity update signaling 46. Thus, a terminal device which receives an emergency call signaling ignores the emergency call if the sector identity signaled by the network on the downlink does not match the sector identity obtained via the update signaling 46.

Fig. 2 shows an example of areas 32 and 36 covered by a specific train emergency call. The area requiring protection can be defined from an incident point 34 as a rectangular area 32 and additional areas 36 covering all routes, lines or tracks branching off from that point including nearby and crossing routes as required by the operator. The length of the additional areas 36 may be defined by the line speed. Thus, all trains within these areas 32 and 36 plus all trains entering these areas should receive the emergency call.

When an emergency call is initiated via the controller interface 20 of Fig. 1, the controller interface 20 allows to select an emergency area of choice. These areas may overlap and could be different from the emergency call area seen from an emergency call initiating train.

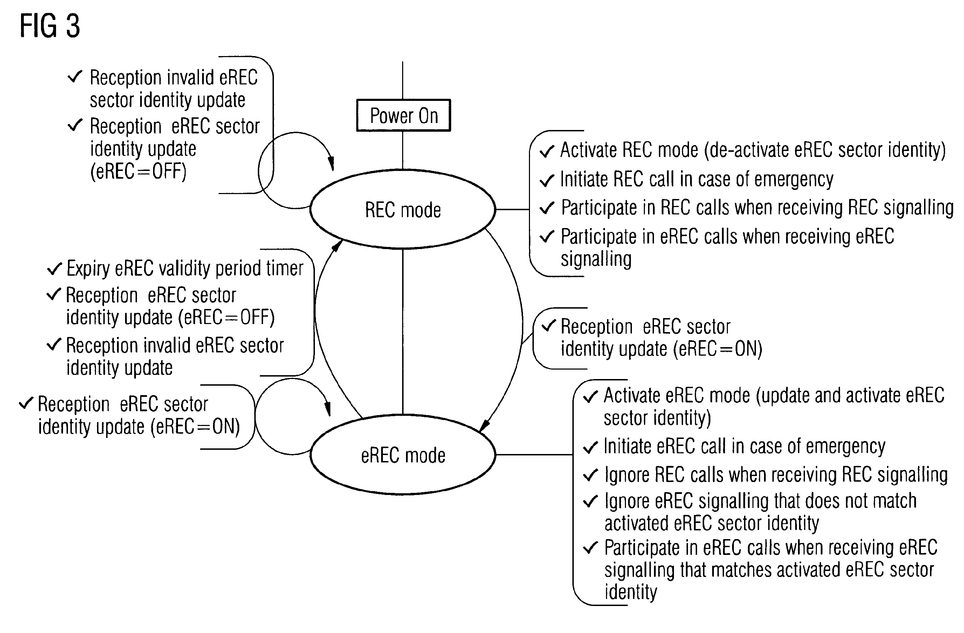

Fig. 3 shows a schematic state diagram of an enhanced emergency call operation of a terminal device according to an embodiment. In a default state of the enhanced emergency call operation, the terminal device (e.g. train radio equipment or CAB radio) resides in the conventional REC mode. Then, it operates as a conventional REC terminal device. However, if the terminal device receives a valid sector identity update, it switches to the enhanced eREC mode, where it initiates an enhanced eREC call in case of an emergency. When the terminal device receives an eREC call signaling or call notification 44 that matches its activated sector identities, it joins the call. If the received call signaling does not match the activated sector identity, it is ignored.

The terminal device may return to the default REC mode if a eREC validity period timer expires, if the eREC mode is turned off via a sector identity update, and/or if an invalid sector identity has been received.

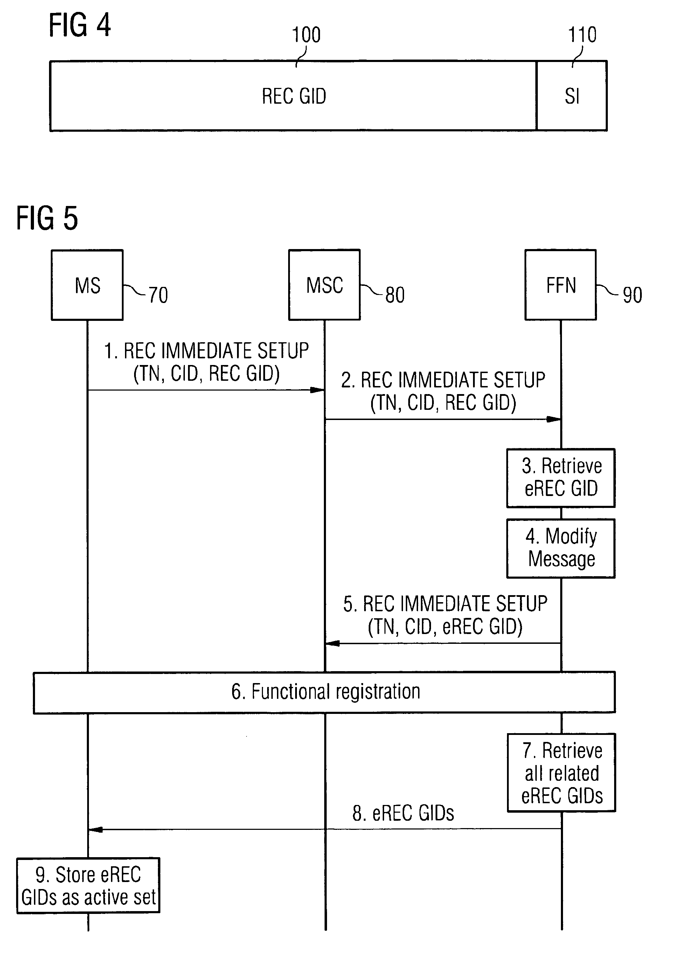

Fig. 5 shows a schematic signaling and processing diagram of an implementation of an origination part of the enhanced emergency call functionality in a Follow-Me functional node (FFN) 90. The FFN 90 is network node in the network of a remote party. It is the node where the Follow-Me (FM) data of the remote party is handled. This can be implemented in a subscriber database (e.g. Home Location Register (HLR)) or any other operator specific network node. Follow Me is a network specific supplementary service and is based on Unstructured Supplementary Service Data (USSD). FM is an USSD application that acts as an unconditional call forwarding. USSD is used to carry the information needed by the FM application through the network. The USSD mechanism allows a user and a network operator defined application to communicate in a way that is transparent to the terminal device and to intermediate network entities. The mechanism allows development of network specific supplementary services.

According to the embodiment, the FFN 90 is implemented in a way to ensure that the A interface towards a circuit switched (CS) core network is not affected and impacts on terminal devices are minimized.

While the regular or conventional REC used a GID of value "299", the enhanced eREC may use for example nine GIDs "290" to "298". Thereby, nine different sector identities can be assigned. Of course, this is only an exemplary number of sector identities and can be replaced by larger or smaller numbers, if required. In any VGCS capable network these new GIDs can be easily introduced through operator configuration of further group calls using eREC GIDs in a group call register (GCR) which may be integrated into a mobile switching center (MSC) of the cellular network 50. Such a configuration management will not require any hardware or software modifications of the MSC. The enhanced emergency call is a group call and can be originated by dispatchers or service subscriber terminal devices.

In case of a dispatcher originated eREC, the dispatcher originates the eREC by using one of the eREC GIDs in the dialed group call reference (GCRef), which is sent to the anchor MSC. Since only the new GIDs (e.g. "290" to "298") are used, only one part or digit of the dialed GCRef carries another value and compliance with standard specifications and corresponding implementations can be met easily.

Fig. 4 shows a schematic format of the eREC GID where a most significant bit field portion 100 corresponds to the REC GID and a least significant bit field portion 110 (which may consist of one or more digits) indicates the sector identity.

Accordingly, the dispatcher terminal device can be reconfigured to handle the additional GIDs for the eREC.

In case of a service subscriber originated eREC, the terminal device of service subscribers triggers an eREC by simply originating a regular REC using GID (e.g. "299") in a setup message, e.g., the IMMEDIATE_SETUP message. The network 50 will eventually transform this message into an eREC depending on the location of the originating terminal device and network configuration data. Thus, the terminal device of the service subscriber does not need to be modified or reconfigured at all to initiate the eREC. Thereby, backwards compatibility can be ensured.

Fig. 5 shows a schematic signaling and processing diagram of an eREC originating procedure involving a mobile station (MS) 70, an MSC 80, and a FFN 90.

When a REC IMMEDIATE_SETUP message with train number (TN), cell identity (CID), and REC GID is received by the MSC 80 from the MS 70 in step 1, the MSC 80 routes this message or request to the FFN 90 (step 2). The routing may be achieved through regular configuration means. The train number is included if the MS 70 is an onboard radio and the cell identity indicates the radio cell in which the train or the MS 70 is currently located. Based on these input parameters the FFN 90 retrieves the eventual eREC GID, e.g. from a preconfigured table, (step 3) and modifies the received REC IMMEDIATE_SETUP message by replacing the REC GID by the retrieved eREC GID (step 4). The modified message or request is then sent back to the MSC 80 (step 5).

From now on, the call setup procedure may be identical to the dispatcher originated eREC.

The above preconfigured table may be created by an operator using regular configuration management means. Since each train number is associated with a specific travel path and the operator knows through which eREC areas this path leads, the preconfigured table may be readily created. In case of an enhanced location dependent addressing (eLDA), the granularity of the preconfigured table could be even finer, i.e., the boarders where eREC sectors change could be more precisely positioned.

At start of a mission, the service subscriber MS 70 may perform a functional registration in a USSD session with the FFN 90 (step 6 of Fig. 5). Based on the registered train number, the FFN 90 can retrieve all eventual eREC GIDs out of its preconfigured table to be used by the MS 70 during its mission (step 7), Then the retrieved eREC GIDs are passed back to the MS 70 (step 8). The MS 70 will then store the retrieved eREC GIDs as an activated set of sector identities (step 9).

As a first example, a train with number "91130", e.g. a modern high speed train, travels from Munich to Düsseldorf. It passes through three eREC areas, one in Munich main station where the train shares radio coverage with regional trains (e.g. S-Bahn), one in the Frankfurt area where the situation is analog, and finally it travels on the high speed line (HSL) from Frankfurt direction Cologne where this HSL shares radio coverage with the old conventional rail (CR) system. The operator has decided to use eREC sector identity "0" for long distance trains and eREC sector identity "1" for regional trains in concerned areas. The HSL has been assigned sector identity "6" and the CR in the same area sector identity "8". At train number registration at Munich main station the train with number "91130" is instructed by the network to activate eREC sector identities "0" and "6".

In a second example, radio cells a, b, c and d cover parts of the area between Frankfurt and Cologne, in which two operationally independent railway lines are located, one HSL (300 km/h) and one CR. The train with number "91130" now travels on the HSL, and a train with number "11111" travels on the conventional line. At FN registration the train with number "91130" has been instructed to use eREC sector identities "0" and "6", while the train with number "11111" has been instructed to use eREC sector identity "8". When the train with number "11111" is in cell b its driver initiates a REC, i.e. pushes the red button. The FFN will find in the table that for the train number "11111" and cell b, sector identity "8" shall be used and a corresponding eREC is notified. The train with number "91130" will see that this notification includes sector identity "8", which is not in its activated set and will ignore the notification, e.g. continue travelling undisturbed at 300 km/h.

There may be an option to change the activated set of sector identities during a certain mission (e.g. complex railway network or change of travel path). To achieve this, the network might at any time inform the terminal device through a network initiated USSD about a new set of eREC GIDs. The terminal device may also ask the network to confirm (or change) the set, e.g., through a terminal initiated USSD, at predefined locations, points in time and/or events. Such an event could be every change of a location area, wherein a certain location area could serve as a location.

The FFN may provide a functionality to ensure that the assignment of sector identities to train numbers and/or locations in the preconfigured table is unanimous. Thereby, it can be ensured that one specific sector identity is not activated in two terminal devices traveling in the same radio area, but on operationally independent lines. This is advantageous especially for high speed trains.

As a third example, there may be three disparate eREC areas A, B and C in a network. A train with number "11111" travels through A and C during its mission, a train with number "99999" through B and C. Thus, both trains travel through C. In this example, the sector identity "5" is used for the train with number "11111", while the sector identity "6" is used for the train "99999". In the eREC area A the train with number "11111" is using the sector identity "3", so that the train with number "11111" has sector identities "3" and "5" activated. In the eREC area B the train with number "99999" is using the sector identity "5" (which is a configuration mistake), and thus has sector identities "5" and "6" activated. Accordingly, the train with number "99999" will respond to an eREC notification intended for the train with number "11111" (and other trains on this other line).

The above functionality of the FFN can ensure that these kinds of mistakes are avoided, in particular for high speed trains. If it cannot be fully avoided due to the complexity of the network, the travel routes and the limited number of sector identities, the FFN might inform the terminal device about this at FFN registration or assign sector identities for only the first part of the mission.

In areas where no eREC sectors are defined, a regular REC (e.g. "299") can be notified over the GCA. All trains irrespective if eREC capable or not will of course join this REC.

In cases where an emergency in a eREC area is affecting more than one sector identity, but was initiated from only one of them, the dispatcher may extend the eREC, e.g., by terminating the eREC and initiating a regular REC over the same area.

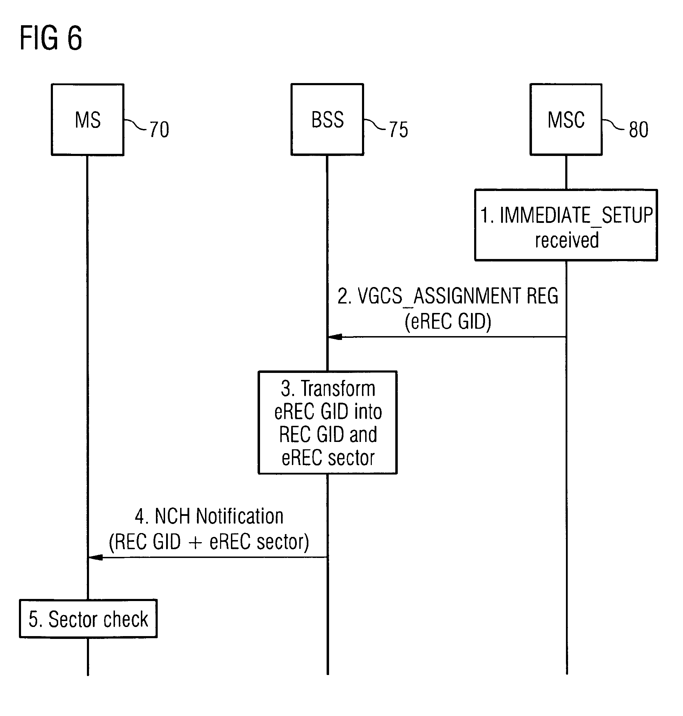

Fig. 6 shows a schematic signaling and processing diagram of an implementation example of a notification procedure of the proposed eREC functionality, provided e.g. in a base station sub-system (BSS).

When an eREC is originated, the anchor MSC 80 receives in step 1 a VGCS IMMEDIATE_SETUP message including a GCRef containing one of the available eREC GIDs and a group call area (GCA). After retrieving required details from the GCR, in particular the individual radio cells assigned to the GCA, the MSC 80 sends a VGCS_ASSIGNMENT_REQ request to the BSS 75 to setup a VGCS with the eREC GID over the radio cell of the GCA (step 2). Hence, eREC GIDs are now used, while the remaining signaling components can be maintained. This provides the advantage of full compliance with prevaling standard specifications and corresponding implementations.

At the BSS 75 the eREC GID will be transformed into a regular REC GID (e.g. "299") plus one additional digit (e.g. "0" to "8") identifying the sector identity (step 3), as shown in Fig. 4 for example. As an example the eREC GID "293" may be transformed into "299" plus "3", the latter identifying the sector identity.

Then, in step 4, a notification channel (NCH) notification is transmitted over the air interface as a regular REC (GID = 299) amended with the new additional one digit field containing the eREC sector identity. This may also apply for all other notifications (e.g. on fast associated control channel (FACCH)), i.e., to an MS which is not in idle mode and resides in the GCA at eREC setup or enters the GCA at a later point in time (late entry).

The terminal device 70 which is adapted to provide the eREC capability will thus check if the received sector identity belongs to its set of activated sector identities or not (step 5). If the signaled sector identity is activated, the terminal device 70 will join the eREC. If not, it will ignore the notification.

The new eREC field 110 of Fig. 4 may be ignored by the terminal device 10 not yet provided with the enhanced eREC capability, so that an incoming eREC will be processed as a regular REC. In areas where no eREC sectors are defined, the regular REC can be notified over the GCA. All trains irrespective of eREC capable or not will then join this REC.

A railway flag may allow for usage of the same generic BSS functionality and software or so in regular public networks, in which the proposed enhanced eREC GIDs are not related with railway emergencies and shall not have any corresponding emergency handling function.

In summary, a method, network element, functional network node, terminal device, and system for handling an emergency call in a track-based transportation system have been described above, wherein the emergency call is based on a group call service covering a predefined geographical area, wherein the predefined geographical area is split into at least two sectors, and wherein a sector information indicating a sector associated with the emergency call is distributed to terminal devices located within the predefined geographical area, the terminal devices controlling their emergency call processing based on the distributed sector information.

It is however noted that the present invention is not restricted to the above embodiments and can be implemented in any track-based transportation system and any network environment. Furthermore, retrieval of the sector identity may be based on only one of the vehicle number and the location (e.g. cell identity). The preferred embodiments may thus vary within the scope of the attached claims.

## Claims

1. A method of handling an emergency call in a track-based transportation system, wherein said emergency call is based on a group call service covering a predefined geographical area, wherein said predefined geographical area is split into at least two sectors, and wherein a sector information indicating a sector associated with said emergency call is distributed to terminal devices located within said predefined geographical area, said terminal devices controlling their emergency call processing based on said distributed sector information.

2. A method according to claim 1, wherein said terminal devices decide based on said sector information whether or not to participate in said emergency call.

3. A method according to claim 1 or 2, wherein said sector information is distributed as one of a predetermined number of sector-specific group identities of said group call service.

4. A method according to claim 3, wherein said sector-specific group identity is transformed into a general group identity of said group call service and a sector identity notified to said terminal devices.

5. A method according to claim 4, wherein said sector identity is notified as a dedicated digit field of said general group identity.

6. A method according to claim 4 or 5, wherein said terminal devices check whether said sector identity belongs to an own set of activated sector identities and either join the emergency call if said sector identity belongs to said set or ignore said notification if said sector identity does not belong to said set.

7. A method according to any one of the preceding claims, wherein said emergency call is triggered by issuing a regular emergency call directed to said predefined geographical area, and wherein said regular emergency call is transformed into said emergency call by a network element provided on a transmission path of said regular emergency call.

8. A method according to claim 7, wherein said network element is a mobile switching center.

9. A method according to claim 7 or 8, wherein said regular emergency call is issued by generating a setup message.

10. A method according to any one of claims 7 to 9, wherein said setup message is routed by said network element to a functional node together with at least one of a vehicle number of a vehicle from which said regular emergency call has been issued and with an identification of a cell in which said vehicle is located.

11. A method according to claim 10, wherein said functional node derives said sector information from at least one of said vehicle number and said identification of said cell.

12. A method according to any one of claims 10 to 11, wherein said functional node retrieves said sector information from a preconfigured storage table, modifies said setup message by replacing a group identity of said regular emergency call by a sector-specific group identity, and sends the modified setup message back to said network element.

13. A method according to any one of claims 10 to 12, wherein said functional node retrieves all sector-specific group identities associated with a vehicle number, in response to a functional registration of a terminal device provided on a vehicle having said vehicle number, and signals said sector-specific group identity to said terminal device, and wherein said terminal device stores said signaled sector-specific group identities as an activated set of sector identities.

14. A method according to claim 13, wherein said activated set of sector identities is changed at at least one of predetermined events, points in time, and locations of said terminal device.

15. A method according to claim 14, wherein said change is initiated by said terminal device or from the network side.

16. A method according to any one of claims 10 to 15, wherein said sector information is selected so as to ensure that said sector identity is not activated in two terminal devices traveling in the same radio area but on operationally independent lines.

17. A network element for handling an emergency call in a track-based transportation system, wherein said emergency call is based on a group call service covering a predefined geographical area, and wherein said predefined geographical area is split into at least two sectors, said network element (10) being adapted to distribute a sector information specifying a sector affected by said emergency call to terminal devices (70) located within said predefined geographical area.

18. A network element according to claim 17, wherein said network element (10) is adapted to distribute said sector information as one of a predetermined number of sector-specific group identities of said group call service.

19. A network element according to claim 18, wherein said network element (10) is adapted to transform said sector-specific group identity into a general group identity of said group call service and a sector identity.

20. A network element according to claim 19, wherein said network element (10) is adapted to distribute said sector identity as a dedicated digit field of said general group identity.

21. A network element according to claim 19 or 20, wherein said network element is a base station subsystem (75).

22. A network element according to claim 17 or 18, wherein said network element (80) is adapted to receive a regular emergency call directed to said predefined geographical area, and to transform said regular emergency call into a sector-specific emergency call associated with said sector.

23. A network element according to claim 22, wherein said network element (80) is adapted to receive said regular emergency call in a setup message.

24. A network element according to claim 23, wherein said network element (80) is adapted to route said setup message to a functional node (90) together with at least one of a vehicle number of a vehicle from which said regular emergency call has been issued and an identification of a cell in which said vehicle is located.

25. A network element according to any one of claims 22 to 24, wherein said network element is a mobile switching center (80).

26. A functional network node for handling an emergency call in a track-based transportation system, wherein said emergency call is based on a group call service covering a predefined geographical area, and wherein said predefined geographical area is split into at least two sectors, said functional network node (90) being adapted to derive a sector information indicating a sector associated with said emergency call from at least one of a received vehicle number and a received identification of a cell.

27. A functional network node according to claim 26, wherein said functional network node (90) is adapted to retrieve said sector information from a preconfigured storage table and to modify a setup message by replacing a group identity of a regular emergency call by a sector-specific group identity.

28. A functional network node according to claim 26 or 27, wherein said functional network node (90) is adapted to retrieve all sector-specific group identities associated with a vehicle number, in response to a functional registration of a terminal device (70) provided on a vehicle having said vehicle number.

29. A terminal device for handling an emergency call in a track-based transportation system, wherein said emergency call is based on a group call service covering a predefined geographical area and wherein said predefined geographical area is split into at least two sectors, said terminal device (70) being adapted to receive a sector information specifying a sector affected by said emergency call and to control its emergency processing based on said sector information.

30. A terminal device according to claim 29, wherein said terminal device (70) is adapted to decide based on said sector information whether or not to participate in said emergency call.

31. A terminal device according to claim 29 or 30, wherein said terminal device (70) is adapted to check whether said sector identity belongs to an own set of activated sector identities, and either to join the emergency call if said sector identities belongs to said set, or to ignore said notification if it does not belong to said set.

32. A terminal device according to claim 31, wherein said terminal device (70) is adapted to initiate a change of said set of activated sector identities at at least one of predetermined events, points in time, and locations.

33. A system comprising at least one network element according to any one of claims 17 to 25, at least one functional network node according to any one of claims 26 to 28, and at least one terminal device according to any one of claims 29 to 32.
